(19) Europäisches Patentamt
European Patent Office
Office européen des brevets

(11) **EP 4 375 768 B1**

(12) **EUROPÄISCHE PATENTSCHRIFT**

(45) Veröffentlichungstag und Bekanntmachung des Hinweises auf die Patenterteilung:
**16.07.2025  Patentblatt 2025/29**

(21) Anmeldenummer: **22209688.5**

(22) Anmeldetag: **25.11.2022**

(51) Internationale Patentklassifikation (IPC):
**G05B 13/02** *(2006.01)*

(52) Gemeinsame Patentklassifikation (CPC):
**G05B 13/027**

(54) **VERFAHREN UND MASCHINENSTEUERUNG ZUM STEUERN EINER MASCHINE**

METHOD AND MACHINE CONTROLLER FOR CONTROLLING A MACHINE

PROCÉDÉ ET COMMANDE DE MACHINE POUR COMMANDER UNE MACHINE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**29.05.2024  Patentblatt 2024/22**

(73) Patentinhaber: **Siemens Aktiengesellschaft**
**80333 München (DE)**

(72) Erfinder: **Swazinna, Phillip**
**85375 Neufahrn (DE)**

(74) Vertreter: **Siemens Patent Attorneys**
**Postfach 22 16 34**
**80506 München (DE)**

(56) Entgegenhaltungen:
**EP-A1- 3 940 596     DE-A1- 102016 224 207**

**Beschreibung**

Unabhängig vom grammatikalischen Geschlecht eines bestimmten Begriffes sind Personen mit männlicher, weiblicher oder anderer Geschlechteridentität mit umfasst.

Zum Steuern von komplexen Maschinen, wie z.B. Robotern, Motoren, Fertigungsanlagen, Fabriken, Werkzeugmaschinen, Fräsmaschinen, Gasturbinen, Windturbinen, Dampfturbinen, chemischen Reaktoren, Kühlanlagen oder Heizungsanlagen, werden im zunehmenden Maße datengetriebene Verfahren des maschinellen Lernens eingesetzt. Hierbei werden insbesondere künstliche neuronale Netze mittels Verfahren des bestärkenden Lernens (Reinforcement Learning) darauf trainiert, für einen jeweiligen Zustand der Maschine eine zustandsspezifische Steueraktion zum Steuern der Maschine zu generieren, durch die eine Performanz der Maschine optimiert wird. Ein solcher zum Steuern einer Maschine optimierter Steuerungsagent wird häufig auch als Policy oder kurz als Agent bezeichnet.

Für eine erfolgreiche Optimierung eines Steuerungsagenten werden in der Regel große Mengen von Betriebsdaten der zu steuernden Maschine oder einer baugleichen oder ähnlichen Maschine als Trainingsdaten benötigt. Die Trainingsdaten sollten dabei die Betriebszustände und andere Betriebsbedingungen der Maschine möglichst repräsentativ abdecken.

In vielen Fällen liegen derartige Trainingsdaten in Form von Datenbanken vor, in denen an der Maschine aufgezeichnete Betriebsdaten gespeichert sind. Derartige gespeicherte Trainingsdaten werden häufig auch als Batch-Trainingsdaten oder Offline-Trainingsdaten bezeichnet. Erfahrungsgemäß hängt ein Trainingserfolg in der Regel davon ab, inwieweit die möglichen Betriebsbedingungen der Maschine durch die Batch-Trainingsdaten abgedeckt sind. Entsprechend ist damit zu rechnen, dass sich mit Batch-Trainingsdaten trainierte Steuerungsagenten in solchen Betriebszuständen ungünstig verhalten, für die nur wenige Batch-Trainingsdaten verfügbar waren.

EP 3 940 596 A1 offenbart ein Computerimplementiertes Verfahren zum Steuern einer Maschine mittels eines Steuerungsagenten gemäß dem Oberbegriff des Anspruchs 1.

Zur Verbesserung des Steuerverhaltens in von Trainingsdaten wenig abgedeckten Bereichen eines Zustandsraums wird in der Publikation "Overcoming Model Bias for Robust Offline Deep Reinforcement Learning" von Phillip Swazinna, Steffen Udluft und Thomas Runkler auf https://arxiv.org/pdf/2008.05533 (abgerufen am 14. April 2022) vorgeschlagen, Dynamikmodelle zur Performanzbewertung zu verwenden. Aber auch bei diesem Verfahren sind die resultierenden Policies oft nicht eindeutig bewertbar oder im Voraus validierbar.

Es ist Aufgabe der vorliegenden Erfindung, ein Verfahren und eine Maschinensteuerung zum Steuern einer Maschine anzugeben, die ein effizienteres und/oder zuverlässigeres Steuern erlauben.

Gelöst wird diese Aufgabe durch ein Verfahren mit den Merkmalen des Patentanspruchs 1, durch eine Maschinensteuerung mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Zum Steuern einer Maschine mittels eines Steuerungsagenten wird eine Vielzahl von Trainingsdatensätzen eingelesen, durch die jeweils ein Maschinenzustand, eine Steueraktion sowie ein aus Anwendung der Steueraktion auf den Maschinenzustand resultierender Folgezustand einander zugeordnet spezifiziert werden. Weiterhin werden für eine Vielzahl der Maschinenzustände jeweils

- anhand der Trainingsdatensätze eine vom jeweiligen Maschinenzustand ausgehende, eine zeitliche Abfolge mehrerer Steueraktionen spezifizierende Trainings-Aktionstrajektorie ermittelt,
- mittels des Steuerungsagenten anhand des jeweiligen Maschinenzustandes eine von diesem ausgehende Aktionstrajektorie prädiziert, und
- eine Abweichung der prädizierten Aktionstrajektorie von der Trainings-Aktionstrajektorie ermittelt. Die Abweichung wird dabei über mehrere Trajektorien-Zeitschritte akkumuliert.

Der Steuerungsagent wird ferner darauf trainiert, die ermittelten Abweichungen zumindest im Mittel zu reduzieren, insbesondere zu minimieren. Unter einem Minimieren sei insbesondere auch ein Annähern an ein Minimum verstanden. Darüber hinaus wird ein Performanzbewerter bereitgestellt, der anhand eines Maschinenzustandes und einer Aktionstrajektorie einen Trajektorien-Performanzwert für ein Steuern der Maschine mittels dieser Aktionstrajektorie ermittelt. Zum Steuern der Maschine werden dann

- ein aktueller Betriebszustand der Maschine erfasst,
- mittels des trainierten Steuerungsagenten eine Vielzahl von vom erfassten Betriebszustand ausgehenden Test-Aktionstrajektorien generiert,
- für die Test-Aktionstrajektorien jeweils ein Trajektorien-Performanzwert durch den Performanzbewerter ermittelt, und
- abhängig von den ermittelten Trajektorien-Performanzwerten eine performanzoptimierende Aktionstrajektorie aus den Test-Aktionstrajektorien selektiert. Anhand der selektierten Aktionstrajektorie wird die Maschine gesteuert.

Zum Ausführen des erfindungsgemäßen Verfahrens sind eine entsprechende Maschinensteuerung, ein Computerprogrammprodukt sowie ein computerlesbares, vorzugsweise nichtflüchtiges Speichermedium vorgesehen.

Das erfindungsgemäße Verfahren sowie die erfindungsgemäße Maschinensteuerung können beispielsweise mittels eines oder mehrerer Computer, Prozessoren, anwendungsspezifischer integrierter Schaltungen (ASIC), digitaler Signalprozessoren (DSP) und/der sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Ein Vorteil der Erfindung ist insbesondere darin zu sehen, dass die Steuerung aufgrund der Berücksichtigung ganzer Trajektorien von Steueraktionen in vielen Fällen weniger anfällig für eine zeitliche Akkumulation von Prädiktionsfehlern ist. Bei bekannten Steuerungen wird dagegen häufig ein Steuerungsagent, ggf. im Zusammenspiel mit einem Transitionsmodell darauf trainiert, nur die jeweils nächste Steueraktion bzw. den jeweils nächsten Folgezustand möglichst genau zu prädizieren. Bei vielen durch iterative Ausführung dieser Einschrittverfahren ermittelten Aktionsabfolgen ist jedoch zu beobachten, dass sich Prädiktionsfehler, insbesondere bei instabilen Maschinenzuständen aufschaukeln. Durch die Reduzierung oder Minimierung von über Trajektorien akkumulierten Abweichungen können derartige Aufschaukelungseffekte insbesondere bei längeren Zeithorizonten in vielen Fällen effektiv verringert werden.

Die von einem erfindungsgemäß trainierten Steuerungsagenten prädizierten Aktionstrajektorien geben also ein in den Trainingsdaten hinterlegtes Steuerungsverhalten in vielen Fällen genauer wieder als ein Einschrittverfahren. Hierdurch kann häufig effektiv vermieden werden, dass die Maschinensteuerung in von den Trainingsdaten unzureichend abgedeckten Bereichen operiert.

Ein weiterer Vorteil der Erfindung ist insbesondere darin zu sehen, dass die Maschinensteuerung auf einfache Weise an wechselnde Optimierungs- oder Performanzziele adaptiert werden kann, indem der Performanzbewerter entsprechend angepasst wird. Ein in der Regel aufwendiges Neutraining des Steuerungsagenten ist in vielen Fällen nicht mehr erforderlich.

Vorteilhafte Ausführungsformen und Weiterbildungen der Erfindung sind in den abhängigen Ansprüchen angegeben.

Gemäß einer vorteilhaften Ausführungsform der Erfindung kann die Vielzahl von Test-Aktionstrajektorien derart generiert werden, dass deren Abweichung von einer durch den trainierten Steuerungsagenten prädizierten Aktionstrajektorie einen vorgegebenen Schwellwert nicht übersteigt. Hierdurch kann die Selektion der performanzoptimierenden Aktionstrajektorie auf Aktionstrajektorien beschränkt werden, die sich nicht zu sehr von einem in den Trainingsdaten hinterlegten Steuerungsverhalten unterscheiden. In vielen Fällen können so unzulässige oder schwer nachteilige Steueraktionen wirksam ausgeschlossen werden.

Weiterhin kann eine jeweilige Abweichung der generierten Test-Aktionstrajektorien von einer durch den trainierten Steuerungsagenten prädizierten Aktionstrajektorie ermittelt werden. Damit kann ein jeweiliger Trajektorien-Performanzwert abhängig von der jeweils ermittelten Abweichung modifiziert, vorzugsweise verringert werden. Insbesondere kann ein jeweiliger Trajektorien-Performanzwert mit steigender Abweichung verringert werden. Die Selektion der performanzoptimierenden Aktionstrajektorie kann dann abhängig von den modifizierten Trajektorien-Performanzwerten erfolgen. Auf diese Weise können Test-Aktionstrajektorien, die weniger von einem in den Trainingsdaten hinterlegten Steuerungsverhalten abweichen, bei der Selektion der performanzoptimierenden Aktionstrajektorie bevorzugt werden.

Darüber hinaus kann die Vielzahl von Test-Aktionstrajektorien durch den trainierten Steuerungsagenten selbst generiert werden. Insofern der Steuerungsagent darauf trainiert ist, aus den Trainingsdaten ermittelte Aktionstrajektorien zu reproduzieren, sollten sich die generierten Test-Aktionstrajektorien nicht zu sehr von einem in den Trainingsdaten hinterlegten Steuerungsverhalten unterscheiden.

Nach einer weiteren vorteilhaften Ausführungsform der Erfindung kann zur Generierung der Test-Aktionstrajektorien ein Rauschsignal in den trainierten Steuerungsagenten eingespeist werden. Durch das eingespeiste Rauschsignal kann ein Zufallselement in die Generierung der Test-Aktionstrajektorien eingebracht werden, das zu einer zumindest teilweise zufallsbasierten Variation oder Diversifizierung der generierten Test-Aktionstrajektorien führt. Eine Variationsbreite kann dabei durch Steuerung einer Amplitude des Rauschsignals eingestellt werden. Auf diese Weise kann ein Steueraktionsraum der Maschine in vorgebbaren Grenzen exploriert werden.

Gemäß einer weiteren vorteilhaften Ausführungsform der Erfindung kann eine Einzel-Steueraktion am Beginn der selektierten Aktionstrajektorie an der Maschine ausgeführt werden. Das Verfahren kann dann mit einem durch die Ausführung der Einzel-Steueraktion erreichten Folge-Betriebszustand der Maschine als aktuellem Betriebszustand fortgesetzt werden. Damit kann ein prädizierter Folge-Betriebszustand der Maschine durch einen tatsächlich gemessenen oder anderweitig erfassten Folge-Betriebszustand ersetzt und so ein eventueller Prädiktionsfehler bereits nach dem ersten Schritt korrigiert werden.

Weiterhin kann ein erstes Maschinenlernmodul anhand der Trainingsdatensätze darauf trainiert sein oder darauf trainiert werden, anhand eines Maschinenzustands und einer Aktionstrajektorie eine resultierende, eine zeitliche Abfolge mehrerer Folgezustände spezifizierende Zustandstrajektorie zu prädizieren. Dabei können über mehrere Zeitschritte akkumulierte Abweichungen zwischen prädizierten Zustandstrajektorien und aus den Trainingsdatensätzen abgeleiteten Trainings-Zustandstrajektorien zumindest im Mittel reduziert, insbesondere minimiert werden. Zur Prädiktion der prädizierten Aktionstrajektorien und/oder zur Generierung der Test-Aktionstrajektorien mittels des Steuerungsagenten können dann durch das trainierte erste Maschinenlernmodul prädizierte Zustandstrajektorien verwendet werden.

Das erste Maschinenlernmodul kann insbesondere ein sogenanntes Transitionsmodell umfassen, das anhand eines Maschinenzustands und einer Steueraktion einen resultierenden Folgezustand prädiziert. Ein vom Transitionsmodell ausgegebener Folgezustand kann dann in den Steuerungsagenten eingespeist werden, der daraus eine im Folgezustand anzuwendende Folge-Steueraktion ableitet. Die Folge-Steueraktion kann zusammen mit dem Folgezustand wieder in das Transitionsmodell eingespeist werden, das daraus wiederum einen weiteren Folgezustand ermittelt. Die vorstehenden Aktionen können auf offensichtliche Weise iteriert werden, um schließlich eine mehrere Folgezustände umfassende Zustandstrajektorie sowie eine mehrere Steueraktion umfassende Aktionstrajektorie zu erhalten.

Nach einer weiteren vorteilhaften Ausführungsform der Erfindung kann ein jeweiliger Trainingsdatensatz einen aus Anwendung einer jeweiligen Steueraktion auf einen jeweiligen Maschinenzustand resultierenden Aktions-Performanzwert umfassen. Entsprechend kann der Performanzbewerter ein zweites Maschinenlernmodul umfassen, das anhand der Trainingsdatensätze darauf trainiert wird oder darauf trainiert ist, anhand eines Maschinenzustands und einer Steueraktion einen resultierenden Aktions-Performanzwert zu reproduzieren. Ein derartiges zweites Maschinenlernmodul wird im Englischen häufig auch als "reward prediction" bezeichnet. In der Praxis werden Transitionsmodelle häufig auch zur "reward prediciton" trainiert. In einem solchen Fall kann das erste Maschinenlernmodul mit dem zweiten Maschinenlernmodul identisch sein.

Gemäß einer weiteren vorteilhaften Ausführungsform der Erfindung kann durch den Performanzbewerter ein Aktions-Performanzwert für eine Einzel-Steueraktion am Ende einer jeweiligen Aktionstrajektorie ermittelt werden. Dem Aktions-Performanzwert kann dann bei der Berechnung des Trajektorien-Performanzwerts für die jeweilige Aktionstrajektorie ein höheres Gewicht zugemessen werden als anderen Aktions-Performanzwerten dieser Aktionstrajektorie. Auf diese Weise kann in vielen Fällen ein übermäßiges Anwachsen eines Prädiktionsfehlers, insbesondere bei verhältnismäßig langen und/oder einen großen Zeithorizont umfassenden Aktionstrajektorien gedämpft werden. Der vorstehende Aktions-Performanzwert kann vorteilhafterweise mittels eines sog. Temporal-Difference-Learning-Verfahrens, insbesondere mittels Q-Learning ermittelt werden.

Ein Ausführungsbeispiel der Erfindung wird nachfolgend anhand der Zeichnung näher erläutert. Dabei veranschaulichen jeweils in schematischer Darstellung:

Figur 1 eine erfindungsgemäße Maschinensteuerung beim Steuern einer Maschine,

Figur 2 ein Training eines Maschinenlernmoduls zur Prädiktion von Folgezuständen und Performanzwerten,

Figur 3 ein Training des Steuerungsagenten zur Prädiktion von Steueraktionen,

Figur 4 eine Ermittlung einer Performanz einer Aktionstrajektorie, und

Figur 5 eine Ermittlung einer performanzoptimierenden Aktionstrajektorie zum Steuern der Maschine.

Insofern in verschiedenen Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

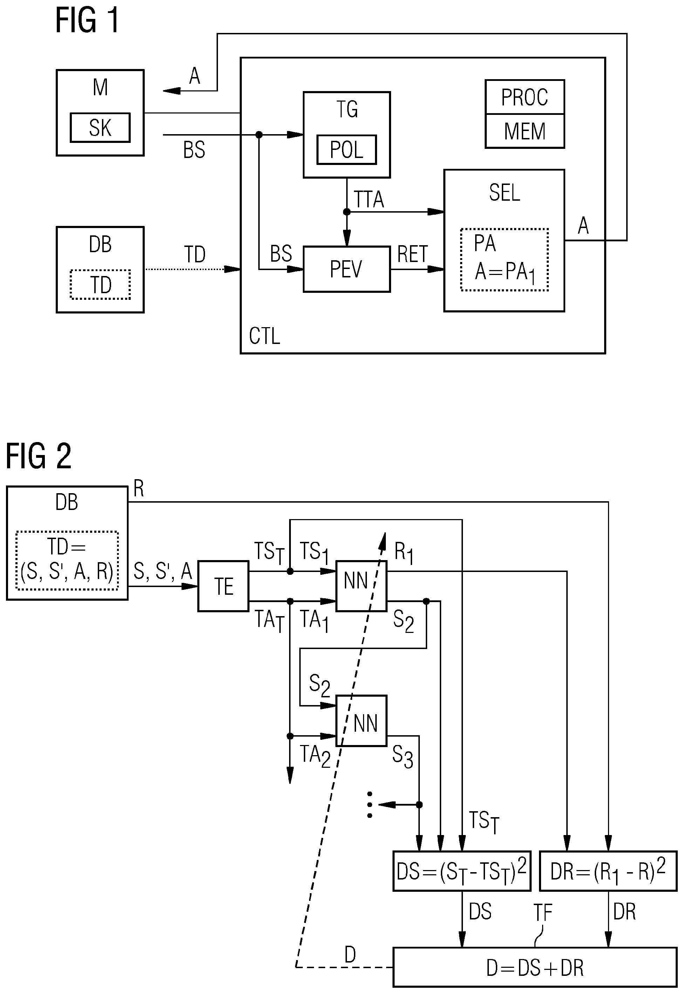

Figur 1 veranschaulicht eine erfindungsgemäße Maschinensteuerung CTL beim Steuern einer Maschine M, z.B. eines Roboters, eines Motors, einer Fertigungsanlage, einer Fabrik, einer Werkzeugmaschine, einer Fräsmaschine, einer Gasturbine, einer Windturbine, einer Dampfturbine, eines chemischen Reaktors, einer Kühlanlage, einer Heizungsanlage oder einer anderen Anlage. Insbesondere kann auch eine Komponente oder ein Teilsystem einer Maschine als Maschine M aufgefasst werden.

Die Maschine M verfügt über eine Sensorik SK zum vorzugsweisen fortlaufenden Erfassen und/oder Messen von Betriebszuständen der Maschine M.

Die Maschinensteuerung CTL ist in Figur 1 extern zur Maschine M dargestellt und mit dieser gekoppelt. Alternativ kann die Maschinensteuerung CTL auch ganz oder teilweise in die Maschine M integriert sein.

Die Maschinensteuerung CTL verfügt über einen oder mehrere Prozessoren PROC zum Ausführen von Verfahrensschritten der Maschinensteuerung CTL sowie über einen oder mehrere mit dem Prozessor PROC gekoppelte Speicher MEM zum Speichern der von der Maschinensteuerung CTL zu verarbeitenden Daten.

Weiterhin weist die Maschinensteuerung CTL einen Trajektoriengenerator TG zum Generieren von Aktionstrajektorien auf. Eine jeweilige Aktionstrajektorie spezifiziert hierbei eine von einem jeweiligen Maschinenzustand der Maschine M ausgehende Abfolge von mehreren aufeinanderfolgenden, an der Maschine M vornehmbaren Steueraktionen. Eine jeweilige Steueraktion einer Aktionstrajektorie wird dabei durch einen jeweiligen Aktionsdatensatz spezifiziert. Durch derartige Aktionsdatensätze können insbesondere Stellgrößen oder Stellgrößenänderungen der Maschine M spezifiziert werden, z.B. zum Ausführen einer Bewegungstrajektorie bei einem Roboter oder zum Einstellen einer Gaszufuhr bei einer Gasturbine.

Zur Generierung der Aktionstrajektorien umfasst der Trajektoriengenerator TG einen lernbasierten Steuerungsagenten POL, der insbesondere durch Verfahren des überwachten und/oder bestärkenden Lernens trainiert oder trainierbar ist. Ein solcher Steuerungsagent wird häufig auch als Policy oder kurz als Agent bezeichnet. Im vorliegenden Ausführungsbeispiel ist der Steuerungsagent POL als künstliches neuronales Netz implementiert.

Der Steuerungsagent POL wird vorab anhand von Trainingsdaten derart trainiert, dass mit seiner Hilfe für einen jeweils vorgegebenen Maschinenzustand generierte Aktionstrajektorien ein in den Trainingsdaten hinterlegtes Steuerungsverhalten möglichst genau wiedergeben. Ein Ablauf dieses Trainings wird untern näher erläutert.

Die Trainingsdaten können an der Maschine M oder an einer dazu ähnlichen Maschine aufgezeichnet oder gemessen und/oder simulativ oder datengetrieben generiert werden. Im vorliegenden Ausführungsbeispiel werden die Trainingsdaten einer Datenbank DB entnommen, in der die Trainingsdaten in Form einer großen Menge von Trainingsdatensätzen TD gespeichert sind.

Weiterhin verfügt die Maschinensteuerung CTL über einen lernbasierten Performanzbewerter PEV. Der Performanzbewerter PEV dient dem Zweck, anhand eines Maschinenzustandes und einer Aktionstrajektorie einen Trajektorien-Performanzwert zu ermitteln, durch den eine Performanz für ein Steuern der Maschine M mittels dieser Aktionstrajektorie quantifiziert wird. Eine Performanz kann hier und im Folgenden insbesondere eine Leistung, einen Ertrag, eine Geschwindigkeit, ein Gewicht, eine Laufzeit, eine Präzision, eine Fehlerrate, einen Ressourcenverbrauch, einen Wirkungsgrad, eine Effizienz, einen Schadstoffausstoß, eine Stabilität, einen Verschleiß, eine Lebensdauer, eine physikalische Eigenschaft, eine mechanische Eigenschaft, eine elektrische Eigenschaft, eine einzuhaltende Nebenbedingung oder andere Zielgrößen der Maschine M oder einer ihrer Komponenten betreffen. Ein Training des Performanzbewerters PEV wird unten näher erläutert.

Darüber hinaus weist die Maschinensteuerung CTL ein Selektionsmodul SEL zum Selektieren einer performanzoptimierenden Aktionstrajektorie auf. Unter einem Optimieren sei insbesondere auch ein Annähern an ein Optimum verstanden.

Nach abgeschlossenem Training können der Trajektoriengenerator TG, der Performanzbewerter PEV und das Selektionsmodul SEL zum optimierten Steuern der Maschine M eingesetzt werden. Zu diesem Zweck werden aktuelle Betriebszustände der Maschine M durch die Sensorik SK fortlaufend gemessen oder anderweitig ermittelt und in Form von Zustandsdatensätzen BS von der Maschine M zur Maschinensteuerung CTL übermittelt. Alternativ oder zusätzlich können die Zustandsdatensätze BS zumindest teilweise mittels eines Simulators, insbesondere eines digitalen Zwillings der Maschine M simulativ ermittelt werden.

Durch einen Zustandsdatensatz, hier insbesondere BS, wird ein Maschinenzustand der Maschine M, vorzugsweise durch einen numerischen Zustandsvektor spezifiziert. Derartige Zustandsdatensätze können Messdaten, Sensordaten, Umgebungsdaten oder andere im Betrieb der Maschine M anfallende oder den Betrieb beeinflussende Daten umfassen, insbesondere Daten über Aktorstellungen, auftretende Kräfte, Leistung, Druck, Temperatur, Ventilpositionen, Emissionen und/oder Ressourcenverbrauch der Maschine M oder einer ihrer Komponenten. Bei Produktionsanlagen können die Zustandsdatensätze auch eine Produktqualität oder andere Produkteigenschaften betreffen.

Die zur Maschinensteuerung CTL übermittelten Zustandsdatensätze BS werden in den Trajektoriengenerator TG sowie in den trainierten Performanzbewerter PEV jeweils als Eingabedaten eingespeist.

Für einen jeweils zugeführten Zustandsdatensatz BS generiert der Trajektoriengenerator TG mittels des trainierten Steuerungsagenten POL eine Vielzahl von Test-Aktionstrajektorien TTA, die von dem durch den jeweiligen Zustandsdatensatz BS spezifizierten aktuellen Betriebszustand ausgehen.

Die generierten Test-Aktionstrajektorien TTA werden vom Trajektoriengenerator TG zum Performanzbewerter PEV sowie zum Selektionsmodul SEL übermittelt.

Durch den Performanzbewerter PEV wird für die übermittelten Test-Aktionstrajektorien TTA jeweils ein Trajektorien-Performanzwert RET für ein vom aktuellen Betriebszustand ausgehendes Steuern der Maschine M mittels der jeweiligen Test-Aktionstrajektorie TTA ermittelt. Die jeweils ermittelten Trajektorien-Performanzwerte RET werden vom Performanzbewerter PEV in Zuordnung zur jeweils bewerteten Test-Aktionstrajektorie TTA in das Selektionsmodul SEL eingespeist.

Durch das Selektionsmodul SEL wird dann anhand der eingespeisten Trajektorien-Performanzwerte RET eine performanzoptimierende Aktionstrajektorie PA aus der Vielzahl von Test-Aktionstrajektorien TTA selektiert; vorzugsweise diejenige Aktionstrajektorie, der ein maximaler Trajektorien-Performanzwert RET zugeordnet ist.

Weiterhin wird durch das Selektionsmodul SEL eine Einzel-Steueraktion $PA_1$ am Beginn der performanzoptimierenden Aktionstrajektorie PA selektiert und in Form eines Aktionsdatensatzes A zur Maschine M übermittelt. Die durch den Aktionsdatensatz A spezifizierte Steueraktion wird dann durch die Maschine M ausgeführt. Auf diese Weise wird die Maschine M in einer für den aktuellen Betriebszustand optimierten Weise gesteuert.

Durch die Ausführung der spezifizierten Steueraktion gelangt die Maschine M in einen Folge-Betriebszustand. Letzterer wird wiederum mittels der Sensorik SK erfasst und als neuer aktueller Betriebszustand in Form eines neuen Zustandsdatensatzes BS zur Maschinensteuerung CTL übermittelt. Das oben beschriebene Steuerverfahren wird dann mit dem neuen Zustandsdatensatz BS iterativ fortgesetzt.

Figur 2 veranschaulicht ein Training eines Maschinenlernmoduls NN zur Prädiktion von Folgezuständen und Performanzwerten. Das Maschinenlernmoduls NN ist Teil des Performanzbewerters PEV. Zur Illustration aufeinanderfolgender Verarbeitungsschritte sind in den Figuren 2,4 und 5 mehrere Instanzen des Maschinenlernmoduls NN dargestellt. Die verschiedenen Instanzen können insbesondere verschiedenen Aufrufen oder Auswertungen von Routinen entsprechen, mittels derer das Maschinenlernmodul NN implementiert ist.

Das Maschinenlernmodul NN ist datengetrieben trainierbar und soll insbesondere einen Zustandsübergang bei Anwendung einer Steueraktion auf einen vorgegebenen Maschinenzustand der Maschine M modellieren. Ein solches Maschinenlernmodul wird häufig auch als Transitionsmodell oder Systemmodell bezeichnet. Im vorliegenden Ausführungsbeispiel ist das Maschinenlernmodul NN als künstliches neuronales Netz, insbesondere als neuronales Feedforward-Netz implementiert.

Das Maschinenlernmodul NN soll anhand der in der Datenbank DB enthaltenen Trainingsdatensätze TD darauf trainiert werden, anhand eines jeweiligen Maschinenzustands und einer jeweiligen Steueraktion einen aus Anwendung der Steueraktion resultierenden Folgezustand der Maschine M sowie einen daraus resultierenden Aktions-Performanzwert vorherzusagen. Der Folgezustand soll derart vorhergesagt werden, dass eine aus sukzessiver Vorhersage nachfolgender Folgezustände resultierende Zustandstrajektorie möglichst wenig von einer aus den Trainingsdaten ermittelten Trainings-Zustandstrajektorie abweicht. Aufgrund der Berücksichtigung ganzer Zustandstrajektorien sind die Vorhersagen des so trainierten Maschinenlernmoduls NN in vielen Fällen weniger anfällig für eine zeitliche Akkumulation von Prädiktionsfehlern.

Unter einem Training sei allgemein eine Optimierung einer Abbildung von Eingabedaten eines Maschinenlernmoduls, hier des Maschinenlernmoduls NN oder des Steuerungsagenten POL auf dessen Ausgabedaten verstanden. Diese Abbildung wird nach vorgegebenen gelernten und/oder zu lernenden Kriterien während einer Trainingsphase optimiert. Als Kriterien können insbesondere bei Prädiktionsmodellen ein Prädiktionsfehler und bei Steuermodellen ein Erfolg einer Steueraktion herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Trainieren lassen sich so insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, K-nächste-Nachbarn-Klassifikatoren, physikalische Modelle oder Entscheidungsbäume. Entsprechend kann das Maschinenlernmodul NN und/oder der Steuerungsagent POL auch durch eines oder mehrere der vorstehend aufgeführten Maschinenlernmodelle implementiert sein oder ein oder mehrere derartige Maschinenlernmodelle umfassen.

Im vorliegenden Ausführungsbeispiel umfasst ein jeweiliger Trainingsdatensatz TD einen Zustandsdatensatz S, einen Aktionsdatensatz A, einen Folgezustandsdatensatz S' sowie einen Aktions-Performanzwert R. Wie oben bereits erwähnt, spezifizieren die Zustandsdatensätze S jeweils einen Maschinenzustand der Maschine M und die Aktionsdatensätze A jeweils eine an der Maschine M in diesem Maschinenzustand vornehmbare Steueraktion. Entsprechend wird durch einen jeweiligen Folgezustandsdatensatz S' ein aus Anwendung der jeweiligen Steueraktion auf den jeweiligen Maschinenzustand resultierender Folgezustand, d.h. ein in einem nachfolgenden Zeitschritt eingenommener Maschinenzustand der Maschine M spezifiziert. Ferner quantifiziert der jeweils zugehörige Aktions-Performanzwert R eine jeweilige Performanz einer Ausführung der jeweiligen Steueraktion im jeweiligen Maschinenzustand. Ein solcher Performanzwert wird im Zusammenhang des maschinellen Lernens auch mit den Begriffen Belohnung, Reward oder - komplementär dazu - Verlust, Kosten oder Loss bezeichnet.

Anhand der Trainigsdatensätze TD werden durch eine Trajektorienermittlung TE für eine Vielzahl von Zustandsdatensätzen S jeweils eine Trainings-Zustandstrajektorie $TS_T$ sowie eine Trainings-Aktionstrajektorie $TA_T$ abgeleitet, die von dem jeweiligen Zustandsdatensatz S ausgehen. Die Trainings-Trajektorien $TS_T$ und $TA_T$ sowie auch nachfolgend beschriebene Trajektorien werden jeweils durch einen Index T indiziert, der die zeitlich aufeinanderfolgenden Schritte 1,..., H durchläuft. H gibt hierbei eine Länge der jeweiligen Trajektorie von z.B. 5, 10, 30, 50 oder 100 an. Vorzugsweise wird für H ein Wert von mindestens 3 oder mindestens 4 gewählt. Dementsprechend umfassen die jeweilige Trainings-Zustandstrajektorie $TS_T$ die zeitlich aufeinanderfolgenden Zustandsdatensätze $TS_1,...,TS_H$ und die jeweilige Trainings-Aktionstrajektorie $TA_T$ die zeitlich aufeinanderfolgenden Aktionsdatensätze $TA_1,...,TA_H$.

Eine jeweilige Trainings-Zustandtrajektorie $TS_T$ kann durch die Trajektorienermittlung TE insbesondere dadurch abgeleitet werden, indem zum jeweiligen Zustandsdatensatz S ein im selben Trainingsdatensatz TD enthaltener Folgezustandsdatensatz S' dazu genutzt wird, einen Folge-Trainingsdatensatz zu ermitteln, der einen auf diesen Folgezustandsdatensatz S' folgenden Zustandsdatensatz enthält. Durch iterative Anwendung dieser Vorgehensweise kann die ganze Trainings-Zustandstrajektorie $(TS_1,...,TS_H)$ abgeleitet werden. Insofern die so durchlaufenen Trainingsdatensätze auch zugehörige Aktionsdatensätze enthalten, kann auf diese Weise auch eine zugehörige Aktionstrajektorie $(TA_1,..,TA_H)$ abgeleitet werden.

Zum Training des Maschinenlernmoduls NN werden für eine Vielzahl von Zustandsdatensätzen S und davon ausgehenden Trainings-Trajektorien $TS_T$ und $TA_T$ dem Maschinenlernmodul NN jeweils ein Trainings-Zustandsdatensatz $TS_1$ am Beginn der jeweiligen Trainings-Zustandstrajektorie $TS_T$ sowie ein Trainings-Aktionsdatensatz $TA_1$ am Beginn der jeweiligen Trainings-Aktionstrajektorie $TA_T = (TA_1, TA_2, ..., TA_H)$ als Eingabedaten zugeführt. Zu einem jeweiligen Paar $(TS_1, TA_1)$ von Eingabedatensätzen werden durch das Maschinenlernmodul NN ein Ausgabedatensatz $R_1$ als prädizierter Aktions-Performanzwert sowie ein Ausgabedatensatz $S_2$ als prädizierter Folgezustandsdatensatz ausgegeben.

Der prädizierte Folgezustandsdatensatz $S_2$ wird dann zusammen mit dem Trainings-Aktionsdatensatz $TA_2$ wiederum in das Maschinenlernmodul NN eingespeist, das daraus einen weiteren prädizierten Folgezustandsdatensatz $S_3$ sowie einen weiteren prädizierten Aktions-Performanzwert (nicht dargestellt) ableitet. Die vorstehende Verfahrensweise kann auf offensichtliche Weise iteriert werden, um schließlich eine durch das Maschinenlernmodul NN prädizierte, vom jeweiligen Trainings-Zustandsdatensatz $TS_1$ ausgehende Zustandstrajektorie $S_T = (S_1=TS_1, S_2, ..., S_H)$ zu erhalten.

Durch das Training des Maschinenlernmoduls NN wird angestrebt, dass einerseits die prädizierten Zustandstrajektorien $S_T$ von den korrespondierenden Trainings-Zustandstrajektorien $TS_T$ und andererseits die prädizierten Aktions-Performanzwerte $R_1$ von den korrespondierenden Aktions-Performanzwerten R zumindest im Mittel möglichst wenig abweichen.

Zu diesem Zweck wird einerseits eine jeweilige Abweichung DS zwischen einer jeweiligen prädizierten Zustandstrajektorien $S_T$ und der jeweils korrespondierenden Trainings-Zustandstrajektorien $TS_T$ ermittelt. Die Abweichung DS kann hierbei als Reproduktionsfehler oder Prädiktionsfehler aufgefasst werden.

Zur Ermittlung einer jeweiligen Abweichung DS zwischen den Zustandstrajektorien $S_T$ und $TS_T$ werden Abweichungen zwischen den einzelnen Zustandsdatensätzen $S_k$ und $TS_k$ über vorzugsweise alle Zeitschritte k=1,...,H akkumuliert. Eine Abweichung zwischen einzelnen Zustandsdatensätzen $S_k$ und $TS_k$ kann dabei insbesondere als euklidischer Abstand $\|S_k - TS_k\|_2$ zwischen den jeweils darstellenden Zustandsvektoren oder als dessen Quadrat $(S_k - TS_k)^2$ ermittelt werden. Damit ergibt sich beispielsweise

$$DS = \sum_{k=2}^{H}(S_k - TS_k)^2.$$

Sofern die Ausgabe eines Folgezustandsdatensatzes $S_{k+1}$ durch das Maschinenlernmodul NN als Funktion eines Zustandsdatensatzes $S_k$ und eines Aktionsdatensatzes $A_k$ dargestellt wird gemäß $S_{k+1} = NN(S_k, A_k)$, ergibt sich daraus

$$DS = \sum_{k=1}^{H-1}(NN(S_k, TA_k) - TS_{k+1})^2.$$

Darüber hinaus wird eine jeweilige Abweichung DR zwischen einem prädizierten Aktions-Performanzwert $R_1$ und einem jeweils korrespondierenden Aktions-Performanzwert R ermittelt, z.B. gemäß DR = $(R_1-R)^2$. Auch die Abweichung DR kann dabei als Reproduktionsfehler oder Prädiktionsfehler aufgefasst werden.

Die jeweiligen Abweichungen DS und DR werden in einer Zielfunktion TF kombiniert, die einen jeweiligen durch das Training zu minimierenden Zielwert D ermittelt. Eine solche Zielfunktion wird im Zusammenhang des maschinellen Lernens häufig auch als Verlustfunktion oder Kostenfunktion bezeichnet. Im vorliegenden Ausführungsbeispiel wird der Zielwert D als Summe der Abweichungen DS und DR berechnet gemäß D = DS + DR. Gegebenenfalls können dabei die Summanden in geeigneter Weise gewichtet werden. Die jeweiligen Zielwerte D können als kombinierter Prädiktionsfehler des Maschinenlernmoduls NN aufgefasst werden.

Die jeweiligen Zielwerte D werden, wie in Figur 2 durch einen strichlierten Pfeil angedeutet, zum Maschinenlernmodul NN zurückgeführt. Anhand der zurückgeführten Zielwerte D wird das Maschinenlernmodul NN darauf trainiert, die Zielwerte D und damit den kombinierten Prädiktionsfehler des Maschinenlernmoduls NN zumindest im Mittel zu minimieren. Zur Minimierung der Zielwerte D ist eine Vielzahl von effizienten Optimierungsverfahren verfügbar.

Durch die Minimierung der Zielwerte D wird das Maschinenlernmodul NN darauf trainiert, zu einem Maschinenzustand und anhand einer Abfolge von Steueraktionen eine resultierende Zustandstrajektorie sowie einen resultierenden Aktions-Performanzwert möglichst gut zu prädizieren. Durch die Berücksichtigung ganzer Trajektorien bei der Bestimmung der Abweichungen DS kann in vielen Fällen ein Aufschaukeln von Prädiktionsfehlern wirksam vermieden oder zumindest abgeschwächt werden.

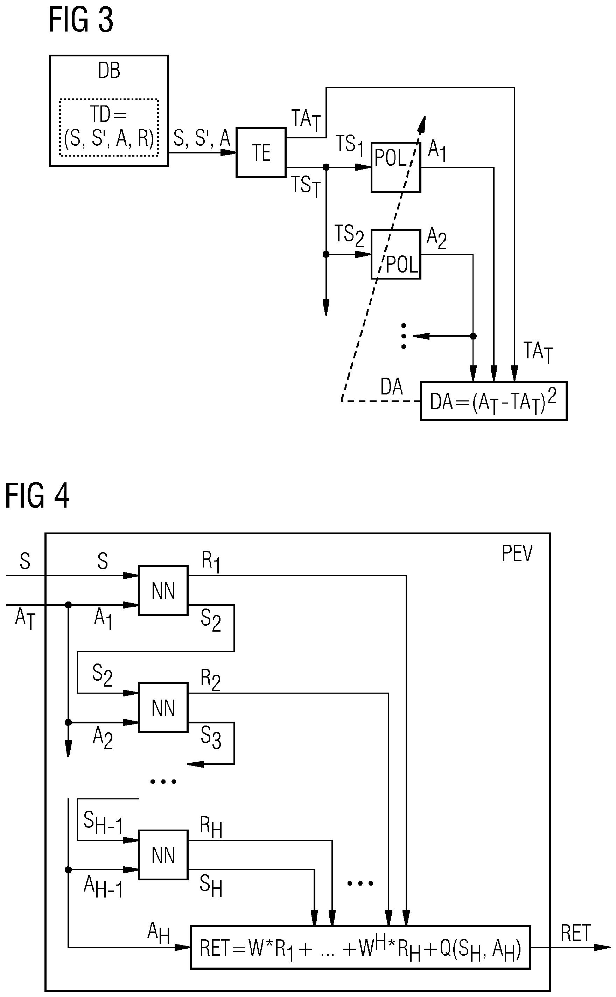

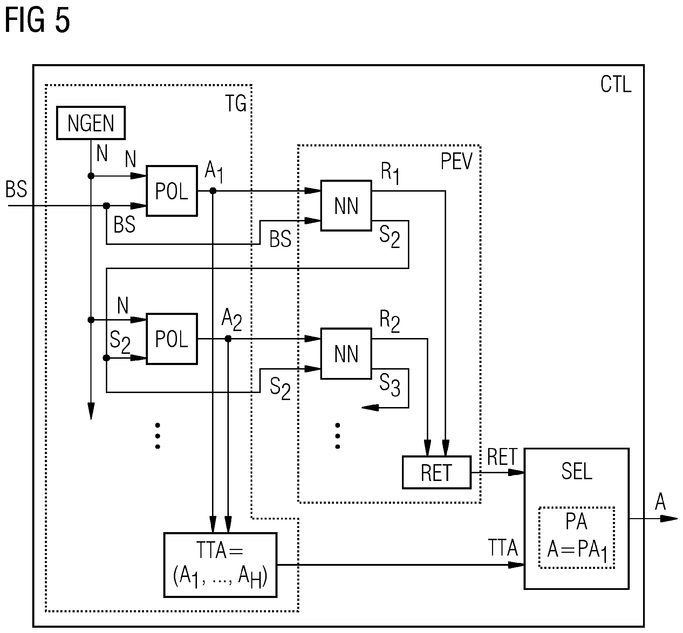

Figur 3 veranschaulicht ein Training des Steuerungsagenten POL zur Prädiktion von Steueraktionen. Zur Illustration aufeinanderfolgender Verarbeitungsschritte sind in den Figuren 3 und 5 mehrere Instanzen des Steuerungsagenten POL dargestellt. Die verschiedenen Instanzen können insbesondere verschiedenen Aufrufen oder Auswertungen von Routinen entsprechen, mittels derer der Steuerungsagent POL implementiert ist.

Der Steuerungsagent POL soll anhand der in der Datenbank DB enthaltenen Trainingsdatensätze TD darauf trainiert werden, anhand eines jeweiligen Maschinenzustandes eine jeweilige in diesem Maschinenzustand ausführbare Steueraktion zu prädizieren. Die jeweilige Steueraktion soll dabei derart prädiziert werden, dass eine aus sukzessiver Anwendung von nachfolgenden Steueraktionen auf Folgezustände resultierende Aktionstrajektorie möglichst wenig von einer aus den Trainingsdaten ermittelten Trainings-Aktionstrajektorie abweicht. Aufgrund der Berücksichtigung ganzer Aktionstrajektorien sind die Vorhersagen des so trainierten Steuerungsagenten POL in vielen Fällen weniger anfällig für eine zeitliche Akkumulation von Prädiktionsfehlern.

Wie oben schon beschrieben, werden aus den Trainingsdatensätzen TD durch die Trajektorienermittlung TE für eine Vielzahl von Zustandsdatensätzen S jeweils eine Trainings-Zustandstrajektorie $TS_T$ sowie eine Trainings-Aktionstrajektorie $TA_T$ abgeleitet, die von dem jeweiligen Zustandsdatensatz S ausgehen. Dabei umfassen die jeweilige Trainings-Zustandstrajektorie $TS_T$ die zeitlich aufeinanderfolgenden Zustandsdatensätze $TS_1,..., TS_H$ und die jeweilige Trainings-Aktionstrajektorie $TA_T$ die zeitlich aufeinanderfolgenden Aktionsdatensätze $TA_1,.., TA_H$.

Zum Training des Steuerungsagenten POL werden diesem für eine Vielzahl von Zustandsdatensätzen S und davon ausgehenden Trainings-Trajektorien $TS_T$ und $TA_T$ jeweils die Trainings-Zustandsdatensätze $TS_k$, k=1,..., H der jeweiligen Trainings-Trajektorie $TS_T$ einzeln als Eingabedatensätze zugeführt. Zu einem jeweiligen Eingabedatensatz $TS_k$ wird dann durch den Steuerungsagenten POL ein jeweiliger Ausgabedatensatz $A_k$ als prädizierter Aktionsdatensatz ausgegeben. Die prädizierten Aktionsdatensätze $A_1,..., A_H$ bilden offenbar eine fortlaufende prädizierte Aktionstrajektorie $A_T = (A_1, ..., A_H)$.

Durch das Training des Steuerungsagenten POL wird angestrebt, dass die prädizierten Aktionstrajektorien $A_T$ von den korrespondierenden Trainings-Aktionstrajektorien $TA_T$ zumindest im Mittel möglichst wenig abweichen.

Zu diesem Zweck wird eine jeweilige Abweichung DA zwischen einer jeweiligen prädizierten Aktionstrajektorie $A_T$ und der jeweils korrespondierenden Trainings-Aktionstrajektorien $TA_T$ ermittelt. Die Abweichung DA kann hierbei als Reproduktionsfehler oder Prädiktionsfehler aufgefasst werden.

Zur Ermittlung einer jeweiligen Abweichung DA zwischen den Aktionstrajektorien $A_T$ und $TA_T$ werden Abweichungen zwischen den einzelnen Aktionsdatensätzen $A_k$ und $TA_k$ über vorzugsweise alle Zeitschritte k=1,...,H akkumuliert. Eine Abweichung zwischen einzelnen Aktionsdatensätzen $A_k$ und $TA_k$ kann dabei insbesondere als euklidischer Abstand $\|A_k - TA_k\|_2$ zwischen den jeweils darstellenden Zustandsvektoren oder als dessen Quadrat $(A_k - TA_k)^2$ ermittelt werden. Damit ergibt sich beispielsweise $DA = \sum_{k=1}^{H}(A_k - TA_k)^2$.

Sofern die Ausgabe eines Aktionsdatensatzes $A_k$ durch den Steuerungsagenten POL als Funktion eines Zustandsdatensatzes $S_k$ dargestellt wird gemäß $A_k = POL(S_k)$, ergibt sich daraus $DA = \sum_{k=1}^{H}(POL(S_k) - TA_k)^2$.

Optional kann dem Steuerungsagenten POL zusätzlich ein Aktionsdatensatz $A_{k-1}$ einer vorangegangenen Steueraktion als weiterer Eingabedatensatz zugeführt werden, so dass $A_k = POL(S_k, A_{k-1})$. In diesem Fall kann die die Abweichung DA ermittelt werden gemäß $DA = \sum_{k=1}^{H}(POL(S_k, A_{k-1}) - TA_k)^2$.

Durch die Berücksichtigung eines früheren prädizierten Aktionsdatensatzes kann in vielen Fällen eine Prädiktionsgenauigkeit des Steuerungsagenten POL signifikant gesteigert werden.

Die jeweiligen Abweichungen DA werden, wie in Figur 3 durch einen strichlierten Pfeil angedeutet, zum Steuerungsagenten POL zurückgeführt. Anhand der zurückgeführten Abweichungen DA wird der Steuerungsagent POL darauf trainiert, die Abweichungen DA und damit den Prädiktionsfehler des Steuerungsagenten POL zumindest im Mittel zu minimieren. Zur Minimierung der Abweichungen DA ist eine Vielzahl von effizienten Optimierungsverfahren verfügbar.

Durch die Minimierung der Abweichungen DA wird der Steuerungsagent POL darauf trainiert, eine von einem Maschinenzustand ausgehende Aktionstrajektorie möglichst gut zu prädizieren. Durch die Berücksichtigung ganzer Trajektorien bei der Bestimmung der Abweichungen DA kann in vielen Fällen ein Aufschaukeln von Prädiktionsfehlern wirksam vermieden oder zumindest abgeschwächt werden.

Figur 4 veranschaulicht eine Ermittlung einer Performanz einer von einem Maschinenzustand ausgehenden Aktionstrajektorie $A_T$ durch den Performanzbewerter PEV. Der Performanzbewerter PEV umfasst das Maschinenlernmodul NN, das wie oben beschrieben trainiert ist. Zur Bewertung der Performanz werden ein den Maschinenzustand spezifizierender Zustandsdatensatz S sowie die zu bewertende Aktionstrajektorie $A_T$ in den Performanzbewerter PEV eingespeist.

Der Zustandsdatensatz S sowie ein Aktionsdatensatz $A_1$ am Anfang der Aktionstrajektorie $A_T =$

$(A_1, A_2,..., A_H)$ werden dem trainierten Maschinenlernmodul NN als Eingabedatensätze zugeführt. Aus dem Eingabedatensätzen S und $A_1$ werden durch das trainierte Maschinenlernmodul NN ein Ausgabedatensatz $R_1$ als prädizierter Aktions-Performanzwert sowie ein Ausgabedatensatz $S_2$ als prädizierter Folgezustandsdatensatz abgeleitet.

Der prädizierte Folgezustandsdatensatz $S_2$ wird dann zusammen mit Aktionsdatensatz $A_2$ der Aktionstrajektorie $A_T$ wiederum in das Maschinenlernmodul NN eingespeist, das daraus einen weiteren prädizierten Folgezustandsdatensatz $S_3$ sowie einen weiteren prädizierten Aktions-Performanzwert $R_2$ ableitet. Die vorstehende Verfahrensweise kann auf offensichtliche Weise iteriert werden, um schließlich eine Abfolge von prädizierten Aktions-Performanzwerten $R_1$, ..., $R_H$ sowie einen prädizierten Folgezustandsdatensatz $S_H$ am Ende einer sukzessive prädizierten Zustandstrajektorie $(S_1, ..., S_H)$ erhalten.

Aus den prädizierten Aktions-Performanzwerten $R_1$, ..., $R_H$, dem prädizierten Folgezustandsdatensatz $S_H$ sowie dem Aktionsdatensatz $A_H$ am Ende der Aktionstrajektorie $A_T$ wird schließlich durch den Performanzbewerter PEV ein Trajektorien-Performanzwert RET für die gesamte vom Zustandsdatensatz S ausgehende Aktionstrajektorie $A_T$ ermittelt.

Zu diesem Zweck wird im vorliegenden Ausführungsbeispiel durch den Performanzbewerter PEV eine gewichtete Summe $W*R_1+...+W^H*R_H$ der Aktions-Performanzwerte $R_1$, ..., $R_H$ berechnet, deren Gewichte mit jedem Zeitschritt in die Zukunft mit einem Diskontierungsfaktor W < 1 multipliziert werden. Für den Diskontierungsfaktor W kann z. B. ein Wert von 0,99, 0,95 oder 0,9 eingesetzt werden.

Zusätzlich zur gewichteten Summe $W*R_1+...+W^H*R_H$ wird durch den Performanzbewerter PEV ein gesonderter Aktions-Performanzwert Q für das Ende der Aktionstrajektorie $A_T$ ermittelt. Der gesonderte Aktions-Performanzwert Q wird aus dem Aktionsdatensatz $A_H$ und dem prädizierten Folgezustandsdatensatz $S_H$ berechnet und zur gewichteten Summe $W*R_1+...+W^H*R_H$ addiert, wobei dem gesonderten Aktions-Performanzwert Q ein höheres Gewicht zugemessen wird als den Aktions-Performanzwerten $R_1$, ..., $R_H$.

Auf diese Weise kann in vielen Fällen ein übermäßiges Anwachsen eines Prädiktionsfehlers, insbesondere bei verhältnismäßig langen und/oder einen großen Zeithorizont umfassenden Aktionstrajektorien gedämpft werden. Der gesonderte Aktions-Performanzwert Q kann vorteilhafterweise mittels eines sogenannten Temporal-Difference-Learning-Verfahrens, insbesondere mittels Q-Learning ermittelt werden.

Der Trajektorien-Performanzwert ergibt sich damit zu $RET = W*R_1+...+W^H*R_H + Q(S_H, A_H)$.

Durch den Trajektorien-Performanzwert RET wird eine über mehrere Zeitschritte in die Zukunft akkumulierte Performanz der Maschine M unter besonderer Berücksichtigung des Endes der bewerteten Aktionstrajektorie $A_T$ quantifiziert. Eine derartige Gesamtperformanz wird im technischen Umfeld des maschinellen Lernens, insbesondere des bestärkenden Lernens häufig auch als "Return" bezeichnet.

Die prädizierte Gesamtperformanz RET wird schließlich durch den Performanzbewerter PEV als Bewertungsergebnis ausgegeben.

Figur 5 veranschaulicht eine Ermittlung einer performanzoptimierenden Aktionstrajektorie PA für einen erfassten Betriebszustand der Maschine M durch die Maschinensteuerung CTL. Die Maschinensteuerung CTL umfasst den Trajektoriengenerator TG mit dem trainierten Steuerungsagenten POL, den Performanzbewerter PEV mit dem trainierten Maschinenlernmodul NN sowie das Selektionsmodul SEL. Der Steuerungsagent POL und das Maschinenlernmodul NN wurden jeweils wie oben beschrieben trainiert.

Zur Ermittlung der performanzoptimierenden Aktionstrajektorie PA wird zunächst ein den erfassten Betriebszustand spezifizierender Betriebs-Zustandsdatensatz BS in die Maschinensteuerung CTL eingespeist. Anhand des Betriebs-Zustandsdatensatzes BS soll mittels des trainierten Steuerungsagenten POL und des trainierten Maschinenlernmoduls NN eine Vielzahl von Test-Aktionstrajektorien TTA generiert werden, die von diesem Betriebszustand ausgehen. Zu diesem Zweck wird der Betriebs-Zustandsdatensatz BS dem trainierten Steuerungsagenten POL sowie dem trainierten Maschinenlernmodul NN als jeweiliger Eingabedatensatz zugeführt.

Zur Variation oder Diversifizierung der zu generierenden Test-Aktionstrajektorien TTA verfügt der Trajektoriengenerator TG über einen einstellbaren Rauschgenerator NGEN, der ein Rauschsignal N erzeugt. Das Rauschsignal N wird ebenfalls in den trainierten Steuerungsagenten POL eingespeist, um die Prädiktion von Aktionsdatensätzen durch den trainierten Steuerungsagenten POL in zufallsbasierter Weise zu beeinflussen. Durch Steuerung einer Amplitude oder ggf. anderer Eigenschaften des Rauschsignals N kann eine Variationsbreite der prädizierten Aktionsdatensätze auf einfache Weise eingestellt werden. Die Amplitude wird vorzugsweise so eingestellt, dass die Prädiktion nur verhältnismäßig geringfügig beeinflusst wird.

Zu dem eingespeisten Betriebs-Zustandsdatensatz BS wird durch den trainierten Steuerungsagenten POL unter dem Einfluss des Rauschsignals N ein prädizierter Aktionsdatensatz $A_1$ ausgegeben. Der prädizierte Aktionsdatensatz A1 wird zusammen mit dem Betriebs-Zustandsdatensatz BS dem trainierten Maschinenlernmodul NN zugeführt, das daraus einen Aktions-Performanzwert $R_1$ sowie einen Folgezustandsdatensatz $S_2$ prädiziert. Der prädizierte Folgezustandsdatensatz $S_2$ wird dann wiederum in den trainierten Steuerungsagenten POL eingespeist, der daraus unter dem Einfluss des Raschsignals N einen weiteren Aktionsdatensatz $A_2$ ableitet. Letzterer wird zusammen mit dem prädizierten Folgezustandsdatensatz $S_2$ erneut dem trai-

nierten Maschinenlernmodul NN zugeführt, das daraus einen weiteren Aktions-Performanzwert $R_2$ sowie einen weiteren Folgezustandsdatensatz $S_3$ prädiziert. Die vorstehende Prozess kann auf offensichtliche Weise iteriert werden, um schließlich eine prädizierte, vom Betriebszustand ausgehende Test-Aktionstrajektorie TTA = $(A_1, A_2, ..., A_H)$ sowie eine zugeordnete Abfolge von prädizierten Aktions-Performanzwerten $R_1, R_2,..., R_H$ zu erhalten.

Aus den prädizierten Aktions-Performanzwerten $R_1, R_2,..., R_H$ wird durch den Performanzbewerter PEV, wie im Zusammenhang mit Figur 4 beschrieben, ein Trajektorien-Performanzwert RET für die zugeordnete Test-Aktionstrajektorie TTA ermittelt.

Die vorstehende Verfahrensweise wird viele Male wiederholt, um so eine Vielzahl zufällig variierter, vom erfassten Betriebszustand ausgehenden Test-Aktionstrajektorien TTA jeweils zusammen mit einem zugeordneten Trajektorien-Performanzwert RET zu erhalten.

Alternativ oder zusätzlich können die Test-Aktionstrajektorien TTA auch dadurch generiert werden, dass ein Raum von Steueraktionen systematisch und/oder zufallsbeeinflusst nach Test-Aktionstrajektorien abgesucht wird, die nur wenig von Aktionstrajektorien abweichen, die mittels des trainierten Steuerungsagenten POL generiert werden. In derartigen Fällen kann in der Regel auf eine Zufallsbeeinflussung des trainierten Steuerungsagenten POL verzichtet werden. Eine solche Suche kann beispielsweise im Rahmen von populationsbasierten Optimierungsverfahren durchgeführt werden.

Die generierten Test-Aktionstrajektorien TTA sowie die jeweils zugeordneten Trajektorien-Performanzwerte RET werden in das Selektionsmodul SEL eingespeist. Durch das Selektionsmodul SEL wird dann, wie im Zusammenhang mit Figur 1 beschrieben, eine performanzoptimierende Aktionstrajektorie PA aus den Test-Aktionstrajektorien TTA ausgewählt. Der erste Aktionsdatensatz $PA_1$ der performanzoptimierenden Aktionstrajektorie PA wird schließlich zur Maschine M übermittelt, um diese in einer Weise zu steuern, die für den erfassten aktuellen Betriebszustand optimiert ist.

**Patentansprüche**

1.  Computerimplementiertes Verfahren zum Steuern einer Maschine (M) mittels eines Steuerungsagenten (POL), wobei

    a) eine Vielzahl von Trainingsdatensätzen (TD) eingelesen werden, durch die jeweils ein Maschinenzustand, eine Steueraktion sowie ein aus Anwendung der Steueraktion auf den Maschinenzustand resultierender Folgezustand einander zugeordnet spezifiziert werden,
    b) für eine Vielzahl der Maschinenzustände jeweils

    - anhand der Trainingsdatensätze (TD) eine vom jeweiligen Maschinenzustand ausgehende, eine zeitliche Abfolge mehrerer Steueraktionen spezifizierende Trainings-Aktionstrajektorie ($TA_T$) ermittelt wird,
    - mittels des Steuerungsagenten (POL) anhand des jeweiligen Maschinenzustandes eine von diesem ausgehende Aktionstrajektorie ($A_T$) prädiziert wird, und
    - eine Abweichung (DA) der prädizierten Aktionstrajektorie ($A_T$) von der Trainings-Aktionstrajektorie ($TA_T$) ermittelt wird, wobei die Abweichung (DA) über mehrere Trajektorien-Zeitschritte akkumuliert wird,

    c) der Steuerungsagent (POL) darauf trainiert wird, die ermittelten Abweichungen (DA) zumindest im Mittel zu reduzieren,
    d) ein Performanzbewerter (PEV) bereitgestellt wird, der anhand eines Maschinenzustandes und einer Aktionstrajektorie ($A_T$) einen Trajektorien-Performanzwert (RET) für ein Steuern der Maschine (M) mittels dieser Aktionstrajektorie ($A_T$) ermittelt, **dadurch gekennzeichnet, dass**
    e) zum Steuern der Maschine (M)

    - ein aktueller Betriebszustand (BS) der Maschine (M) erfasst wird,
    - mittels des trainierten Steuerungsagenten (POL) eine Vielzahl von vom erfassten Betriebszustand ausgehenden Test-Aktionstrajektorien (TTA) generiert wird,
    - für die Test-Aktionstrajektorien (TTA) jeweils ein Trajektorien-Performanzwert (RET) durch den Performanzbewerter (PEV) ermittelt wird, und
    - abhängig von den ermittelten Trajektorien-Performanzwerten (RET) eine performanzoptimierende Aktionstrajektorie (PA) aus den Test-Aktionstrajektorien (TTA) selektiert wird, und f) die Maschine (M) anhand der selektierten Aktionstrajektorie (PA) gesteuert wird.

2.  Verfahren nach Anspruch 1, **dadurch gekennzeichnet,**
    **dass** die Vielzahl von Test-Aktionstrajektorien (TTA) derart generiert wird, dass deren Abweichung von einer durch den trainierten Steuerungsagenten (POL) prädizierten Aktionstrajektorie einen vorgegebenen Schwellwert nicht übersteigt.

3.  Verfahren nach einem der vorhergehenden Ansprüche, **dadurch gekennzeichnet,**
    **dass** eine jeweilige Abweichung der generierten Test-Aktionstrajektorien (TTA) von einer durch den trainierten Steuerungsagenten prädizierten Aktionstrajektorie ermittelt wird,

**dass** ein jeweiliger Trajektorien-Performanzwert (RET) abhängig von der jeweils ermittelten Abweichung modifiziert wird, und

**dass** die Selektion der performanzoptimierenden Aktionstrajektorie (PA) abhängig von den modifizierten Trajektorien-Performanzwerten erfolgt.

4. Verfahren nach einem der vorhergehenden Ansprüche,
**dadurch gekennzeichnet,**
**dass** die Vielzahl von Test-Aktionstrajektorien (TTA) durch den trainierten Steuerungsagenten (POL) generiert wird.

5. Verfahren nach einem der vorhergehenden Ansprüche,
**dadurch gekennzeichnet,**
**dass** zur Generierung der Test-Aktionstrajektorien (TTA) ein Rauschsignal (N) in den trainierten Steuerungsagenten (POL) eingespeist wird.

6. Verfahren nach einem der vorhergehenden Ansprüche,
**dadurch gekennzeichnet,**

**dass** eine Einzel-Steueraktion ($PA_1$) am Beginn der selektierten Aktionstrajektorie (PA) an der Maschine (M) ausgeführt wird, und

**dass** das Verfahren mit einem durch die Ausführung der Einzel-Steueraktion ($PA_1$) erreichten Folge-Betriebszustand der Maschine (M) als aktuellem Betriebszustand (BS) fortgesetzt wird.

7. Verfahren nach einem der vorhergehenden Ansprüche,
**dadurch gekennzeichnet,**

**dass** ein erstes Maschinenlernmodul (NN) anhand der Trainingsdatensätze (TD) darauf trainiert ist oder darauf trainiert wird, anhand eines Maschinenzustands und einer Aktionstrajektorie ($A_T$) eine resultierende, eine zeitliche Abfolge mehrerer Folgezustände spezifizierende Zustandstrajektorie ($S_T$) zu prädizieren, wobei über mehrere Zeitschritte akkumulierte Abweichungen (DS) zwischen prädizierten Zustandstrajektorien ($S_T$) und aus den Trainingsdatensätzen (TD) abgeleiteten Trainings-Zustandstrajektorien ($TS_T$) zumindest im Mittel reduziert werden, und

**dass** durch das trainierte erste Maschinenlernmodul (NN) prädizierte Zustandstrajektorien ($S_T$) zur Prädiktion der prädizierten Aktionstrajektorien ($A_T$) und/oder zur Generierung der Test-Aktionstrajektorien (TTA) mittels des Steuerungsagenten (POL) verwendet werden.

8. Verfahren nach einem der vorhergehenden Ansprüche,
**dadurch gekennzeichnet,**
**dass** dem Steuerungsagenten (POL) zur Prädiktion der prädizierten Aktionstrajektorien ($A_T$) und/oder zur Generierung der Test-Aktionstrajektorien (TTA) ein oder mehrere Folgezustände zugeführt werden.

9. Verfahren nach einem der vorhergehenden Ansprüche,
**dadurch gekennzeichnet,**

**dass** ein jeweiliger Trainingsdatensatz (TD) einen aus Anwendung einer jeweiligen Steueraktion auf einen jeweiligen Maschinenzustand resultierenden Aktions-Performanzwert (R) umfasst, und

**dass** der Performanzbewerter (PEV) ein zweites Maschinenlernmodul (NN) umfasst, das anhand der Trainingsdatensätze (TD) darauf trainiert ist oder darauf trainiert wird, anhand eines Maschinenzustands und einer Steueraktion einen resultierenden Aktions-Performanzwert (R) zu reproduzieren.

10. Verfahren nach einem der vorhergehenden Ansprüche,
**dadurch gekennzeichnet,**
**dass** durch den Performanzbewerter (PEV) ein Aktions-Performanzwert (Q) für eine Einzel-Steueraktion ($A_H$) am Ende einer jeweiligen Aktionstrajektorie ($A_T$) ermittelt wird, und dass diesem Aktions-Performanzwert (Q) bei der Berechnung des Trajektorien-Performanzwerts (RET) für die jeweilige Aktionstrajektorie ($A_T$) ein höheres Gewicht zugemessen wird als anderen Aktions-Performanzwerten ($R_1,...,R_H$) dieser Aktionstrajektorie ($A_T$).

11. Maschinensteuerung (CTL) zum Steuern einer Maschine (M) umfassend einen oder mehrere Prozessoren (PROC) zum Ausführen der Schritte eines Verfahrens nach einem der vorhergehenden Ansprüche.

12. Computerprogrammprodukt, umfassend Befehle, die bei der Ausführung des Programms durch einen Computer diesen veranlassen ein Verfahren nach einem der Ansprüche 1 bis 10 auszuführen.

13. Computerlesbares Speichermedium mit einem Computerprogrammprodukt nach Anspruch 12.

**Claims**

1. Computer-implemented method for controlling a machine (M) by means of a control agent (POL), wherein

a) a multiplicity of training data sets (TD) are read in and each specify, in a manner assigned to each other, a machine state, a control action and a subsequent state resulting from application of the control action to the machine state,
b) for a multiplicity of the machine states in each case

- a training action trajectory ($TA_T$) starting from the respective machine state and specifying a chronological sequence of a plurality of control actions is determined on the basis of the training data sets (TD),
- an action trajectory ($A_T$) starting from the respective machine state is predicted by means of the control agent (POL) on the basis of the respective machine state, and
- a deviation (DA) of the predicted action trajectory ($A_T$) from the training action trajectory ($TA_T$) is determined, wherein the deviation (DA) is accumulated over a plurality of trajectory time steps,

c) the control agent (POL) is trained to reduce the determined deviations (DA) at least on average,
d) a performance evaluator (PEV) is provided and determines, on the basis of a machine state and an action trajectory ($A_T$), a trajectory performance value (RET) for controlling the machine (M) by means of this action trajectory ($A_T$), **characterized in that**
e) to control the machine (M)

- a current operating state (BS) of the machine (M) is recorded,
- a multiplicity of test action trajectories (TTA) starting from the recorded operating state are generated by means of the trained control agent (POL),
- for each of the test action trajectories (TTA), a trajectory performance value (RET) is determined by the performance evaluator (PEV), and
- depending on the determined trajectory performance values (RET), a performance-optimizing action trajectory (PA) is selected from the test action trajectories (TTA), and

f) the machine (M) is controlled on the basis of the selected action trajectory (PA).

2. Method according to Claim 1, **characterized in that** the multiplicity of test action trajectories (TTA) are generated in such a way that their deviation from an action trajectory predicted by the trained control agent (POL) does not exceed a predefined threshold value.

3. Method according to one of the preceding claims, **characterized**

**in that** a respective deviation of the generated test action trajectories (TTA) from an action trajectory predicted by the trained control agent is determined,
**in that** a respective trajectory performance value (RET) is modified depending on the deviation determined in each case, and in that the performance-optimizing action trajectory (PA) is selected depending on the modified trajectory performance values.

4. Method according to one of the preceding claims, **characterized**
**in that** the multiplicity of test action trajectories (TTA) are generated by the trained control agent (POL).

5. Method according to one of the preceding claims, **characterized**
**in that**, in order to generate the test action trajectories (TTA), a noise signal (N) is fed into the trained control agent (POL).

6. Method according to one of the preceding claims, **characterized**
**in that** a single control action ($PA_1$) is executed on the machine (M) at the start of the selected action trajectory (PA), and in that the method is continued with a subsequent operating state of the machine (M), which is achieved by executing the single control action ($PA_1$), as the current operating state (BS).

7. Method according to one of the preceding claims, **characterized**

**in that** a first machine learning module (NN) has been or is trained, on the basis of the training data sets (TD), to predict a resulting state trajectory ($S_T$) specifying a chronological sequence of a plurality of subsequent states on the basis of a machine state and an action trajectory ($A_T$), wherein deviations (DS), accumulated over a plurality of time steps, between predicted state trajectories ($S_T$) and training state trajectories ($TS_T$) derived from the training data sets (TD) are reduced at least on average, and
**in that** state trajectories ($S_T$) predicted by the trained first machine learning module (NN) are used to predict the predicted action trajectories ($A_T$) and/or to generate the test action trajectories (TTA) by means of the control agent (POL).

8. Method according to one of the preceding claims, **characterized in that** one or more subsequent states are supplied to the control agent (POL) in order to predict the predicted action trajectories ($A_T$) and/or to generate the test action trajectories (TTA).

9. Method according to one of the preceding claims, **characterized in that** a respective training data set (TD) comprises an action performance value (R) resulting from the application of a respective control action to a respective machine state, and in that the performance evaluator (PEV) comprises a second machine learning module (NN) which has been or is trained, on the basis of the training data sets (TD), to reproduce a resulting action performance value (R) on the basis of a machine state and a control action.

10. Method according to one of the preceding claims, **characterized in that** the performance evaluator (PEV) determines an action performance value (Q) for a single control action ($A_H$) at the end of a respective action trajectory ($A_T$), and in that this action performance value (Q) is given a higher weight when calculating the trajectory performance value (RET) for the respective action trajectory ($A_T$) than other action performance values ($R_1,...,R_h$) of this action trajectory ($A_T$).

11. Machine controller (CTL) for controlling a machine (M), comprising one or more processors (PROC) for carrying out the steps of a method according to one of the preceding claims.

12. Computer program product comprising instructions that, when the program is executed by a computer, cause said computer to carry out a method according to one of Claims 1 to 10.

13. Computer-readable storage medium having a computer program product according to Claim 12.

## Revendications

1. Procédé mis en œuvre par ordinateur destiné à la commande d'une machine (M) au moyen d'un agent de commande (POL), dans lequel

a) une pluralité de jeux de données d'entraînement (TD) sont lues, par le biais desquels respectivement un état de machine, une action de commande ainsi qu'un état consécutif résultant de l'application de l'action de commande sur l'état de machine sont spécifiés et associés les uns aux autres,
b) pour une pluralité des états de machine respectivement

- à l'aide des jeux de données d'entraînement (TD) une trajectoire d'action d'entraînement ($TA_T$) spécifiant une suite temporelle de plusieurs actions de commande résultant de l'état de machine respectif est déterminée,
- une trajectoire d'action ($A_T$) résultant de l'état de machine respectif est prédite au moyen de l'agent de commande (POL) à l'aide de l'état de machine respectif, et
- un écart (DA) de la trajectoire d'action prédite ($A_T$) par rapport à la trajectoire d'action d'entraînement ($TA_T$) est déterminée, dans lequel l'écart (DA) est accumulé sur plusieurs étapes temporelles de trajectoire,

c) l'agent de commande (POL) est entraîné pour réduire au moins en moyenne les écarts (DA) déterminés,
d) un évaluateur de performances (PEV) est mis à disposition qui détermine à l'aide d'un état de machine et d'une trajectoire d'action ($A_T$) une valeur de performances de trajectoire (RET) pour une commande de la machine (M) au moyen de cette trajectoire d'action ($A_T$), **caractérisé en ce que**
e) pour la commande de la machine (M)

- un état de fonctionnement actuel (BS) de la machine (M) est détecté,
- au moyen de l'agent de commande (POL) entraîné une pluralité de trajectoires d'actions de test (TTA) résultant de l'état de fonctionnement détecté sont générées,
- pour les trajectoires d'actions de test (TTA) respectivement une valeur de performances de trajectoire (RET) est déterminée par le biais de l'évaluateur de performances (PEV), et
- en fonction des valeurs de performances de trajectoire (RET) déterminées une trajectoire d'action optimisant les performances (PA) est sélectionnée à partir des trajectoires d'actions de test (TTA) et

f) la machine (M) est commandée à l'aide de la trajectoire d'action (PA) sélectionnée.

2. Procédé selon la revendication 1, **caractérisé en ce que** la pluralité de trajectoires d'actions de test (TTA) sont générées de telle sorte que l'écart de celles-ci par rapport à une trajectoire d'action prédite par le biais de l'agent de commande (POL) entraîné ne dépasse pas une valeur de seuil prédéfinie.

**3.** Procédé selon l'une quelconque des revendications précédentes, **caractérisé en ce que**

un écart respectif des trajectoires d'actions de test (TTA) générées est déterminé par le biais de la trajectoire d'action prédite par le biais de l'agent de commande entraîné, une valeur de performances de trajectoire (RET) respective est modifiée en fonction de l'écart respectivement déterminé, et la sélection de la trajectoire d'action optimisant les performances (PA) se produit en fonction des valeurs de performances de trajectoire modifiées.

**4.** Procédé selon l'une quelconque des revendications précédentes, **caractérisé en ce que** la pluralité de trajectoires d'actions de test (TTA) sont générées par le biais de l'agent de commande (POL) entraîné.

**5.** Procédé selon l'une quelconque des revendications précédentes, **caractérisé en ce que** pour la génération des trajectoires d'actions de test (TTA) un signal de fluctuation (N) est alimenté dans l'agent de commande (POL) entraîné.

**6.** Procédé selon l'une quelconque des revendications précédentes, **caractérisé en ce que**

au début de la trajectoire d'action sélectionnée (PA) une action de commande individuelle ($PA_1$) est réalisée au niveau de la machine (M), et le procédé est continué avec un état de fonctionnement consécutif de la machine (M) atteint par le biais de la réalisation de l'action de commande individuelle ($PA_1$) en tant qu'état de fonctionnement actuel (BS).

**7.** Procédé selon l'une quelconque des revendications précédentes, **caractérisé en ce que**

un premier module d'apprentissage machine (NN) est entraîné à l'aide des jeux de données d'entraînement (TD) ou entraîné pour prédire à l'aide d'un état de machine et d'une trajectoire d'action ($A_T$) une trajectoire d'état ($S_T$) résultante spécifiant une séquence temporelle de plusieurs états consécutifs, dans lequel des écarts (DS) accumulés par le biais de plusieurs étapes temporelles sont au moins réduits en moyenne entre des trajectoires d'état prédites ($S_T$) et des trajectoires d'état d'entraînement ($TS_T$) dérivées des jeux de données d'entraînement (TD), et des trajectoires d'état ($S_T$) prédites par le biais du premier module d'apprentissage machine (NN) destinées à la prédiction des trajectoires d'action ($A_T$) prédites et/ou destinées à la génération des trajectoires d'actions de test (TTA) sont utilisées au moyen de l'agent de commande (POL).

**8.** Procédé selon l'une quelconque des revendications précédentes, **caractérisé en ce que** un ou plusieurs états consécutifs sont acheminés vers l'agent de commande (POL) pour la prédiction des trajectoires d'action prédites ($A_T$) et/ou pour la génération des trajectoires d'actions de test (TTA).

**9.** Procédé selon l'une quelconque des revendications précédentes, **caractérisé en ce que**

un jeu de données d'entraînement (TD) respectif comprend une valeur de performances d'action (R) résultant de l'application d'une action de commande respective sur un état de machine respectif, et l'évaluateur de performances (PEV) comprend un second module d'apprentissage machine (NN) qui est entraîné à l'aide des jeux de données d'entraînement (TD) ou est entraîné pour reproduire une valeur de performances d'action (R) résultant d'un état de machine et d'une action de commande.

**10.** Procédé selon l'une quelconque des revendications précédentes, **caractérisé en ce que** par le biais de l'évaluateur de performances (PEV) une valeur de performances d'action (Q) pour une action de commande individuelle ($A_H$) est déterminée à la fin d'une trajectoire d'action ($A_T$) respective et **en ce que** lors du calcul de la valeur de performances de trajectoire (RET) pour la trajectoire d'action ($A_T$) respective un poids plus élevé est associé à cette valeur de performances d'action (Q) qu'à d'autres valeurs de performances d'action ($R_1,..., R_H$) de cette trajectoire d'action ($A_T$).

**11.** Commande de machine (CTL) destinée à la commande d'une machine (M) comprenant un ou plusieurs processeurs (PROC) destinée à la réalisation des étapes d'un procédé selon l'une quelconque des revendications précédentes.

**12.** Produit de programme informatique, comprenant des instructions qui, lors de la réalisation du programme par le biais d'un ordinateur amènent ce dernier à réaliser un procédé selon l'une quelconque des revendications 1 à 10.

**13.** Support de mémoire lisible par ordinateur avec un produit de programme informatique selon la revendication 12.

## FIG 1

## FIG 2

## FIG 3

## FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3940596 A1

**In der Beschreibung aufgeführte Nicht-Patentliteratur**

- **PHILLIP SWAZINNA** ; **STEFFEN UDLUFT** ; **THOMAS RUNKLER**. *Overcoming Model Bias for Robust Offline Deep Reinforcement Learning*, 14 April 2022, https://arxiv.org/pdf/2008.05533